# EUROPEAN PATENT APPLICATION

(11) **EP 2 749 355 A2**
(43) Date of publication of application: **02.07.2014**
(21) Application number: 12461570.9
(22) Date of filing: 29.12.2012
(51) Int. Cl.: B01J 37/04, B01J 23/22, B01J 35/00

(54) **The catalyst suspension and method for preparing thereof**

(30) Priority: 28.12.2012 PL 40229212
(71) Applicant: SMF Poland Spolka Z Ograniczona Odpowiedzialnoscia, 21-045 Swidnik (PL)
(72) Inventor: Rosolowski, Michal, 05-070 Sulejowek (PL); Kula, Estera, 22-360 Rejowiec (PL)
(74) Representative: Belz, Anna

(57) **Abstract**

The object of the invention is the catalyst suspension in form of a concentrated water suspension containing oxides, hydroxides, carbonates, sulfates, nitrates of elements of I and II family of elements as the catalysing substances, as well as aluminosilicates, dispersants, wetting agents, agents decreasing the freezing temperature, antifoaming agents, mineral carriers, thickeners and bactericidal agents, **characterized by the fact that** it contains from 58% to 43% of weight of water, from 1% to 3% of weight of auxiliary agents, from 0,5 to 1,5% of weight of wetting agent, from 0,5% to 1,5% of weight of dispersant, from 1% to 3% of weight of the agent decreasing the freezing temperature, from 0,2% to 0,4% of weight of the bacteriostatic agent, from 0,1% to 0,3% of weight of the emulsifier, from 40% to 50% of weight of the catalysing substances of the catalysing substance, while the catalysing substances have a form of micronized powder with the level of comminution lower than 5 µm.

The method of production of catalyst suspension is also the object of the invention.

## Description

The object of the invention is a non-dusting, stable concentrate of catalytic suspension intended for use in heat power industry as an addition to the fuel mixture in form of coal and fine coal for boilers and the method of its production.

There are solutions concerning the additions in form of catalysing mixtures added to the coal fuel in dry, powder form or in wet from - as a solution or suspension containing the catalyst.

The catalysts used in industry in powder form are dispensed directly to the surface of fine coal, as it was revealed in the Polish description of patent application **P-386676,** in which the nanostructural catalyst for simultaneous reduction of nitric oxides and oxidation of sulphur dioxide into sulphur trioxide in combustion gases from boiler devices in the fuel combustion zone has an active phase, which is constituted by the aluminosilicate matrix of synthetic zeolite, previously activated with EDTA salts, with built-in vanadium ions from sodium metavanadate, preferably within the range of 0,1 to 1% of weight. A variety of invention of nanostructural catalyst for simultaneous reduction of nitric oxides and oxidation of sulphur dioxide into sulphur trioxide in combustion gases from boiler devices in the fuel combustion zone has an active phase, which is constituted by the aluminosilicate matrix of synthetic zeolite with built-in vanadium ions introduced in the process of ion exchange from sodium metavanadate, preferably within the range of 0,1 to 1% of weight. Another variety of invention is a nanostructural catalyst for simultaneous reduction of nitric oxides and oxidation of sulphur dioxide into sulphur trioxide in combustion gases from boiler devices in the fuel combustion zone has an active phase, which is constituted by the aluminosilicate matrix of synthetic six-channel zeolite, previously activated with citric acid, with built-in vanadium ions from sodium metavanadate, preferably within the range of 0,1 to 1% of weight.

Another solution revealed in a Russian patent description RU2005115635 is the coal combustion in the presence of catalyst containing a metal selected from among many metals, including from the I and II family of elements (among others potassium, calcium, strontium).

Another solution of catalyst was presented in the Chinese patent description CN1228466, in which the sodium chloride, sodium nitrates and potassium nitrates as well as calcium carbonate which are salts of I and II family of elements function as a swelling agent and the catalyst are iron, manganese, chromium and cobalt oxides.

The catalysts in powder form are inconvenient during dosage to coal, causing high dustiness of rooms, high losses resulting in the increase of costs of the catalyst's use and high environmental pollution and dust threat for the heating plant employees.

Wet catalysing mixtures can be used in form of solutions or suspensions.

An example of such catalysing solution was revealed in the description of European patent EP0368834. The invention refers to the water solution of catalyst for improvement of combustion of materials containing carbon and/or hydrocarbons, such as oils, combustible gases of fuels and solid fuels and/or to removal of carbon black and pitch sediments from the surface of combustion chamber. Water solution of catalyst contains cerium and salts of alkali metals, alkaline earth metals and/or magnesium compounds. Use of water solution of catalyst according to claims from 1 to 10 covers also the phases prior to solid fuel combustion.

The American patent description US4406664 presents a solution containing an improved method of coal cleaning and separation of contaminations from coal through treatment of its surface with water solution containing a monomer able to polymerization, catalyst and liquid organic carrier, thanks to which the coal surface becomes lithophilic and hydrophobic which enables the removal of other hydrophilic substances such as contaminations of mineral ash from coal.

Concentrated solutions constitute a more modern form of catalysts dosage than the powdery form and water solutions.

The American patent description US2006175230, reveals a composition of nanocatalyst intended for liquid and solid fuels combustion in dispersive form, which may be produced as stable suspension - for facilitation of storage, transport and catalyst's use. The catalyst covers one or more atoms of main types of catalyst selected from the group including chromium, manganese, ferric, cobalt, nickel, copper, zirconium, tin, zinc, wolfram, titanium, molybdenum and vanadium, and the dispersing agent contains a lot of organic particles complexing at least a part of the above mentioned active atoms of catalyst. The catalyst complex is stable and forms a suspension enabling its storage and transport without considerable agglomeration of particles.

The German patent description DE19701961 reveals an addition in form of a biocatalyst for liquid hydrocarbon fuels and carbon. The suspension contains non-toxic, natural surface-active agents, such as emulsifiers, solubilizers, stabilisers, complexing agents and binders containing salts of metals and organic acids as well as natural oils. Microelements are chosen from among: Fe, Co, Ni, Mo, (Zn), Mo, Ti, V, Al, Cu, Se, N, Cr, Te Li, Rb. Biological and mineral components include also - besides trace elements - the compounds of Na, K, Ca, Mg, Sr that are elements from I and II family of elements.

The Chinese patent description CN102127482 reveals a coal combustion accelerator in form of a mixture containing an emulsifier, catalyst and dispersing agent dispersed at a uniform rate. The catalyst may consist in aluminium or ferric oxides, inorganic and organic salts of aluminum and ferric, as well as their organic complexes. Among the organic substances included in the catalyst mixture there are also such chemical compounds as various alcohols, organic acids, including acetic, ethyl acetate, polyethylene glycol and various other organic compounds, including the aromatic ones.

The description of Polish patent claim P-322516 includes among others the method of catalyst's use through activation of catalysis field in coal ballast characterized by the fact that the catalyst is added to solid fuel together with dolomite or without the dolomite in a way ensuring common contact of components in the combustion process, together with coal ballast.

Regardless to the number of advantages of the concentrated water suspensions, their production causes many difficulties. Preparation of water suspension that will be adhesive to the coal surface, chemically stable, non-sedimenting and possible to be stored for at least 2 years is a difficult task. In an improperly prepared and stored catalyst suspension there are natural processes leading to destruction of the developed internal structure, mostly sedimentation and flocculation processes, which considerably decreases the catalyst's effectiveness.

An additional difficulty for the proper preparation of the concentrated water suspension of catalyst is the necessity to prepare a stable catalyst suspension with variable contents of particular components, especially the mineral ones, which has to be adjusted to the particular type of coal each time.

Catalyst suspension in form of a concentrated water suspension containing oxides, hydroxides, carbonates, sulfates, nitrates of elements of I and II family of elements as the catalysing substances, as well as aluminosilicates, dispersants, wetting agents, agents decreasing the freezing temperature, antifoaming agents, mineral carriers, thickeners and bactericidal agents, according to the invention contains from 58% to 43% of weight of water, from 1 % to 3% of weight of auxiliary agents, from 0,5 to 1,5% of weight of wetting agent, from 0,5% to 1,5% of weight of dispersant, from 1% to 3% of weight of the agent decreasing the freezing temperature, from 0,2% to 0,4% of weight of the bacteriostatic agent, from 0,1% to 0,3% of weight of the emulsifier, from 40% to 50% of weight of the catalysing substances of the catalysing substance, while the catalysing substances have a form of micronized powder with the level of comminution lower than 5 µm. Preferably, the emulsifier should be the solution of carboxymethylcellulose (CMC), the agent decreasing the freezing temperature is ethylene glycol, the wetting agent is the derivative of alkanodiol mixed with sodium sulfated alcohol.

The method of production of catalyst suspension in form of concentrated water solution consisting in micronisation of mineral components of the catalyst in water solution of dispersants and wetting agents in commonly known devices for suspensions comminuting, and then stabilisation of the received dispersion with thickeners and bactericidal agents according to the invention consists in the fact that from 400 to 500 parts by weight of components of catalyst substance, from 430 to 580 parts by weight of water and from 10 to 30 parts by weight of auxiliary agents, including from 5 to 15 parts by weight of wetting agent, are added to from 10 to 30 parts by weight of the agent decreasing the freezing temperature and then they are intensively mixed. The received suspension is then comminuted until the dispersion of particles of catalyst substance below 5 µm and stabilised with the addition of emulsifier in amount from 10 to 30 parts by weight of bacteriostatic agent in amount of from 20 to 40 parts by weight.

Additional substances included in the formula influence on the durability of the preparation, facilitate the agent application, influence on the physicochemical features of the catalyst suspension, enable mixing many catalyst components with various physicochemical features, prevent from foaming, limit the negative influence of mineral components of the catalyst on the durability of elements of dispensing devices and enable at least 2 years long storage of the suspension in decreased temperature without losing the physical properties of concentrated water suspension of the catalyst. Additional substances facilitating the penetration of catalyst's components to the inside of coal grains are an important element of each formula. The catalyst suspension in form of the concentrated water suspension works definitely more efficiently and in lower doses than the same catalyst in powdery form.

The auxiliary substances not only enable the introduction of catalyst components into the state of suspended concentrated water suspension, but also increase their effectiveness which results in the decrease of the amount of catalyst added to coal. Normally, 1 kg of catalyst (after conversion to a dry mass) is used for 1000 kg of coal. It means that in case of the catalyst's concentration in suspension of 45%, 2,5 dm³ of the concentrated water suspension of the catalyst shall be used for 1000 kg of coal.

The catalyst suspension according to the invention removes the surface presence of coal dust and hydrocarbons, decreases the surface tension on the border of phases: fossil coal-catalyst, provides better contact of the catalyst with the coal surface and additionally increases the efficiency of the catalyst. Unexpectedly, introduction to the catalyst suspension in form of the concentrated water suspension of the addition of 0,2% of carboxymethylcellulose (CMC) resulted in the synergism in form of better contact of the catalyst with the coal surface and additional increase of efficiency of the catalyst consisting in the simultaneous coverage of the fine coal with catalyst layer and increase of the catalyst contact zone, as well as drainage of the excess of water and auxiliary agents from the coal surface.

The catalyst suspension increases the afterburning of coal in boilers of WR about twice (in percentage). In case of catalyst with the components of catalyst substances according to the invention in powdery form with stable concentration of 0,1% to the coal feed, the afterburning of coal in amount of 4,5% is achieved. In case of use of powdery catalyst suspension with stable concentration of 0,1% to the coal feed, the afterburning of coal in amount of 8,2% is achieved.

For example, the catalyst suspension according to the invention is received through intense mixing of 50,5% of weight of water, 2% of weight of the auxiliary agents, including 1% of weight of the wetting agent, for example Soprophor 4D, 2% of weight of propyl glycol, and gradually added 45,0% of weight of catalyst components in form of mixed and micronized powder in a high-speed mixer. The prepared catalyst mixture contained a calcined Omyadol = calcium and magnesium oxides CaO/MgO (50/50) - 75% of the catalyst's composition, graphite - 2,5% of catalyst, vanadium pentoxide V2O5 - 2,5%, zinc oxide ZnO - 5%, potassium permanganate KMn04 - 5%, bicarbonate of soda NaHC03 - 10%. Then, the entire mixture is milled in a pearl or ball grinder until the components are comminuted to 5 µm, and then 0,3% of weight of the solution of bacteriostatic agent, for example Metatin K604 and 0,2% of weight of carboxymethylcellulose (CMC) are added. The catalyst mixture ratio presented in the example is used e.g. for coal from Czeczott (Piast) mine.

By this method, a non-dusting, stable concentrate of concentrated suspension of energetic catalyst is received, intended for direct use in power industry in boilers of WR type.

## Claims

1. Catalyst suspension in form of a concentrated water suspension containing oxides, hydroxides, carbonates, sulfates, nitrates of elements of I and II family of elements as the catalysing substances, as well as aluminosilicates, dispersants, wetting agents, agents decreasing the freezing temperature, antifoaming agents, mineral carriers, thickeners and bactericidal agents, **characterized by the fact that** it contains from 58% to 43% of weight of water, from 1% to 3% of weight of auxiliary agents, from 0,5 to 1,5% of weight of wetting agent, from 0,5% to 1,5% of weight of dispersant, from 1% to 3% of weight of the agent decreasing the freezing temperature, from 0,2% to 0,4% of weight of the bacteriostatic agent, from 0,1% to 0,3% of weight of the emulsifier, from 40% to 50% of weight of the catalysing substances of the catalysing substance, while the catalysing substances have a form of micronized powder with the level of comminution lower than 5 µm.

2. The catalyst suspension according to claim 1 **characterized by the fact that** the solution of carboxymethylcellulose (CMC) is used as the emulsifier.

3. The catalyst suspension according to claim 1 **characterized by the fact that** the ethylene glycol is used as the agent decreasing the freezing temperature.

4. The catalyst suspension according to claim 1 **characterized by the fact that** the derivative of alkanadiol mixed with sodium sulphated alcohol is used as the wetting agent.

5. The method of production of catalyst suspension in form of concentrated water solution consisting in micronisation of mineral components of the catalyst in water solution of dispersants and wetting agents in commonly known devices for suspensions comminuting, and then stabilisation of the received dispersion with thickeners and bactericidal agents **characterized by the fact that** from 400 to 500 parts by weight of components of catalyst substance, from 430 to 580 parts by weight of water and from 10 to 30 parts by weight of auxiliary agents, including from 5 to 15 parts by weight of wetting agent, are added to from 10 to 30 parts by weight of the agent decreasing the freezing temperature and then they are intensively mixed. The received suspension is then comminuted until the dispersion of particles of catalyst substance below 5 µm and stabilised with the addition of emuisifier in amount from 10 to 30 parts by weight of bacteriostatic agent in amount of from 20 to 40 parts by weight.
